Europäisches Patentamt

European Patent Office

Office européen des brevets

(11) Veröffentlichungsnummer: **0 037 076**
**A2**

# (12) EUROPÄISCHE PATENTANMELDUNG

(21) Anmeldenummer: 81102251.6

(22) Anmeldetag: 25.03.81

(51) Int. Cl.³: **G 01 S 7/36**
G 01 S 7/12

(30) Priorität: 28.03.80 DE 3012035

(43) Veröffentlichungstag der Anmeldung:
07.10.81 Patentblatt 81/40

(84) Benannte Vertragsstaaten:
BE FR GB IT NL

(71) Anmelder: SIEMENS AKTIENGESELLSCHAFT Berlin
und München
Postfach 22 02 61
D-8000 München 22(DE)

(72) Erfinder: Günther, Heinzdieter
Heiterwangerstrasse 34
D-8000 München 70(DE)

(72) Erfinder: Siegel, Harald, Ing.-grad.
Johann-Werner-Strasse 4
D-8035 Gauting(DE)

(54) **Puls-Doppler-Radargerät mit einer Videoschwelle.**

(57) Die Erfindung betrifft ein Puls-Doppler-Radargerät mit einer Videoschwelle und mit einem PPI-Sichtgerät. Bei Verwendung von ECCM-Maßnahmen im Signalverarbeitungsteil des Radarempfängers kommt nur eine bestimmte Auswahl von Signalen auf dem Sichtgerät zur Anzeige. Um dem Operator einen Überblick über die Gesamtluftlage zu ermöglichen, werden den durch ECCM ausgewählten Signalen alle weiteren die Videoschwelle überschreitenden Signale als zusätzliches Bild mit verminderter Helligkeit unterlegt.

EP 0 037 076 A2

./...

FIG 1

SIEMENS AKTIENGESELLSCHAFT          Unser Zeichen

Berlin und München                  VPA  80 P 6 5 5 9  E

0037076

## Puls-Doppler-Radargerät mit einer Videoschwelle

Die Erfindung bezieht sich auf ein Puls-Doppler-Radargerät mit einer in der Auswerteschaltung für die Videosignale vorgesehenen Videoschwelle zur Eliminierung von für die Weiterverarbeitung, z. B. Darstellung auf einem PPI-Sichtgerät unerwünschten Signalen und mit Einrichtungen, z. B. CFAR-Schaltung und/oder PLD-Schaltung zur Durchführung von ECCM-Maßnahmen.

Bei der Auswertung von Videosignalen entstehen bei Anwendung von ECCM-Maßnahmen Situationen, die durch Verringerung der Empfindlichkeit der Auswerteschaltung zu einem Verlust an Information für den Operator führen können. Es ist das Bestreben jeder Überwachung, möglichst ohne Zeitverlust die am besten geeignet ECCM-Maßnahme zu erkennen und einzusetzen und erforderliche Umschaltungen zum jeweils günstigsten Zeitpunkt durchzuführen. Nur in einfachen Luftlage-Situationen wird es dem Operator gelingen, sich durch wechselndes Aus- oder Einschalten z. B. einer CFAR- oder einer PLD-Schaltung einen Gesamtüberblick der tatsächlichen Situation zu verschaffen.

Der Erfindung liegt die Aufgabe zugrunde, bei einem Puls-Doppler-Radargerät der eingangs genannten Art den Überblick auf dem Sichtgerät unabhängig von der jeweils eingeschalteten ECCM-Maßnahme ohne zusätzliche Belastung des Operators mit geringem Schaltungsaufwand zu erhalten.

Ha 1 Ath / 26.3.1980

7 Ausfertigungen
1.Ausfertigung

Diese Aufgabe wird gemäß der Erfindung dadurch gelöst, daß während der Durchführung einer oder mehrerer ECCM-Maßnahmen der Darstellung der extrahierten Zielechos am Sichtgerät alle am Ausgang der Videoschwelle (Festschwelle) erhaltenen Signale als zusätzliches Bild mit verminderter Helligkeit unterlegt sind.

Am Sichtgerät ist zu jeder Zeit erkennbar, ob und wo schwächere Ziele in Folge der durch ECCM-Maßnahmen verringerten Empfindlichkeit verloren gehen und wo welche Art von Störern unterdrückt werden. Eine in Grenzsituationen möglicher Weise getroffene Fehlentscheidung hinsichtlich der Unterscheidung zwischen Zielen und Störern kann auf diesem Wege optisch erkannt und durch gezieltes Eingreifen Eingreifen in die ECCM-Strategie berichtigt werden, indem z. B. bestimmte ECCM-Funktionen abgeschaltet werden.

Gemäß einer vorteilhaften Weiterbildung der Erfindung kann das mit verminderter Helligkeit unterlegte Bild zur Ausnutzung des z. B. für die Festzielecho-Darstellung verwendeten Ablenksystems des Sichtgerätes erzeugt werden.

Die Erfindung und weitere Einzelheiten der Erfindung werden an Hand der Fig. 1 bis 3 näher erläutert.

In den Figuren ist zu je einer Signalspannung die zugehörige Zieldarstellung bei z. T. gleichzeitigem Vorhandensein eines Störers auf dem Bildschirm dargestellt.

Es zeigen:
Fig. 1   die Signalspannung und die zugehörige Zieldarstellung bei Vorhandensein eines Blockstörers,
Fig. 2   die Signalspannung und die Zieldarstellung bei Vorhandensein eines Dauerstörers,

Fig. 3 die Signalspannung und die zugehörige Zieldarstellung im Zusammenhang mit einer Fehlentscheidung der Störeridentifizierung.

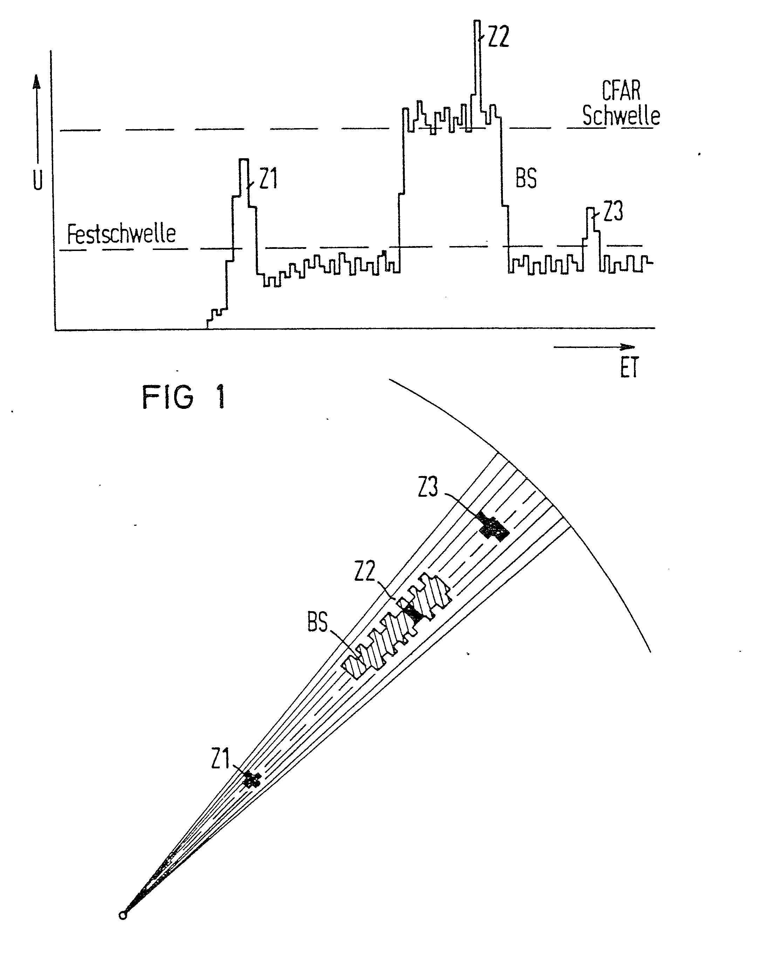

Im oberen Teil der Fig. 1 ist die am Ausgang der Nachintegrationsschaltung abgenommene Signalspannung U über
den Entfernungstoren ET aufgetragen. Eine gestrichelt
eingezeichnete CFAR-Schwelle wird von der Signalspannung
eines Blockstörers BS, dem ein Zielecho Z2 überlagert
ist, überschritten. Zwei schwächere Zielechos Z1 und Z2
würden bei eingeschalterer CFAR-Schwelle verloren gehen.

Im unteren Teil der Fig. 1 ist ein Ausschnitt einer
Sichtanzeige dargestellt, in dem der Blockstörer BS
und die drei Ziele Z1 bis Z3 erfaßt sind. Dieser Darstellung ist zugrundegelegt, daß ein in der Auswerteschaltung vorgesehner Pulslängen-Diskriminator (PLD)
den Blockstörer BS austastet und das überlagerte
Ziel Z2 erkennt. Bei nicht eingeschalterer CFAR-Schwelle
erscheinen auch die schwächeren Ziele Z1 und Z3. Bei
Anwendung der Schaltung gemäß der Erfindung wird die
am Ausgang einer Videoschwelle in der Auswerteschaltung
erhaltene Signalspannung in der Weise ausgewertet,
daß sie als Bild mit verminderter Helligkeit den extrahierten Zielechos hinterlegt wird. Auf diese Weise wird
auch der Blockstörer BS für den Beobachter nach Lage
und Dauer erkennbar.

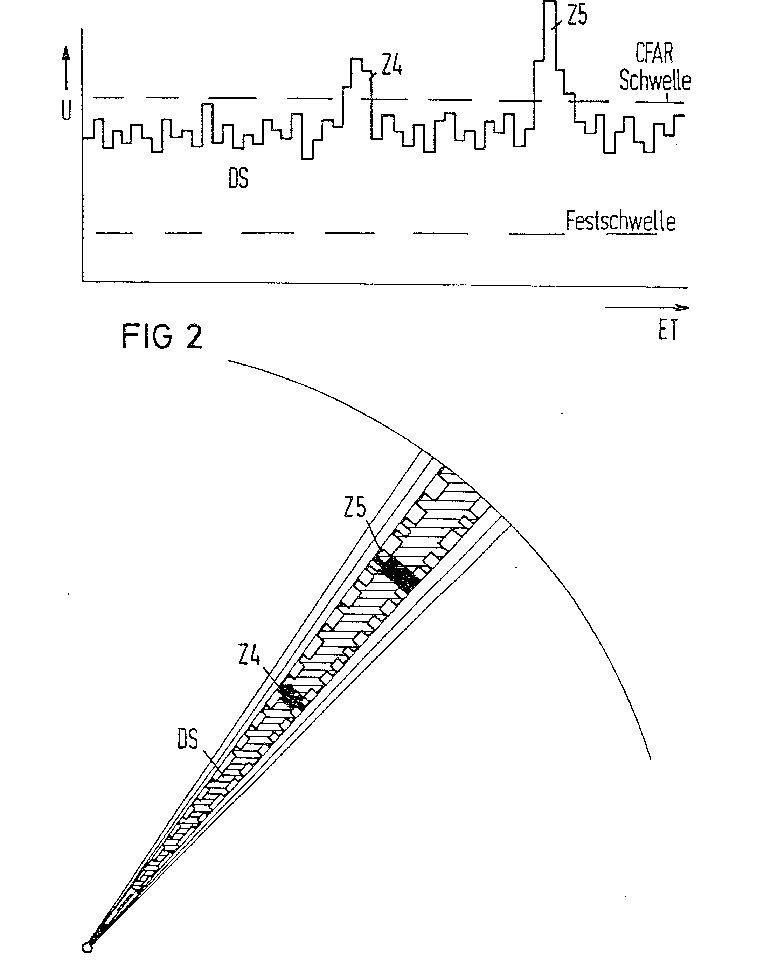

Im oberen Teil der Fig. 2 ist ebenfalls eine Signalspannung, die einen Blockstörer darstellen soll, über
den Entfernungstoren dargestellt. Die Störspannung ist
hier von zwei Zielechos Z4 und Z5 überlagert. Durch die
weit angehobene gestrichelt dargestellte CFAR-Schwelle
wird der Dauerstörer unterdrückt. Die die Schwelle
überschreitenden Signalanteile werden als Zielechos Z4
und Z5 extrahiert.

0037076

Der im unteren Teil der Fig. 2 dargestellte Ausschnitt einer Sichtanzeige ist in der Lage, sowohl den durch die CFAR-Schwelle unterdrückten Dauerstörer DS als auch die überlagerten Zielechos Z4 und Z5 darzustellen, da den extrahierten Zielechos die am Ausgang der Videoschwelle entnommene Signalspannung mit verminderter Helligkeit unterlegt ist. Der Beobachter am Sichtgerät ist somit über die Dauer und Lage des Dauerstörers DS informiert.

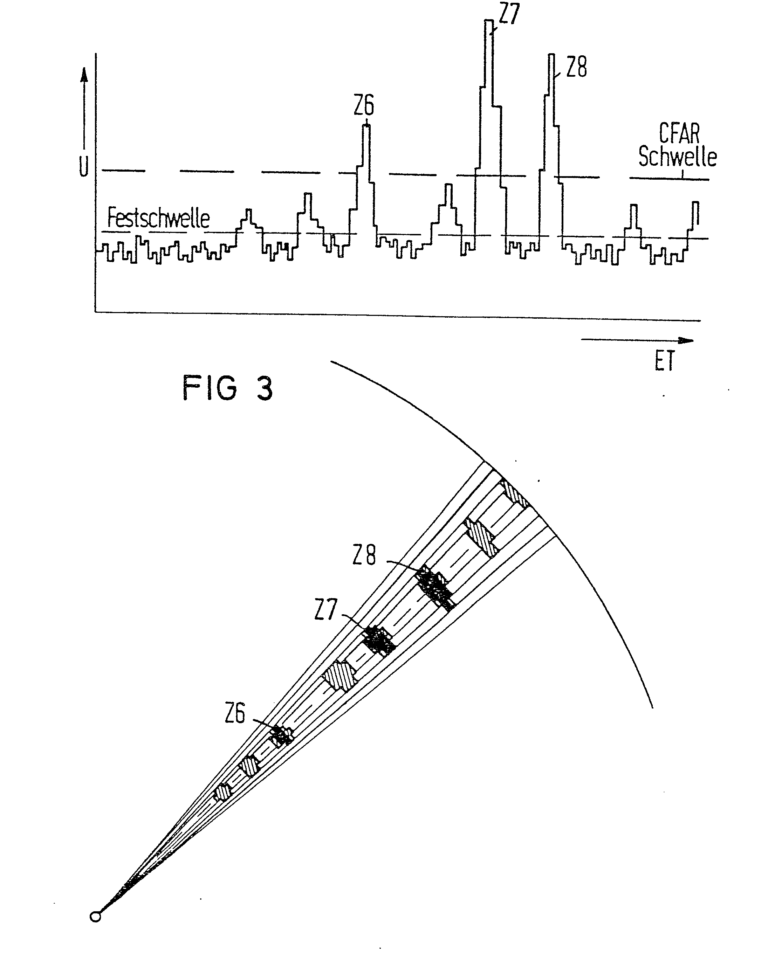

Die Fig. 3 zeigt im oberen Teil als Ausgangssituation die Signalspannung U am Ausgang der Nachintegrationsschaltung mit acht aufeinanderfolgenden Zielechos unterschiederlicher Amplitude. Bei eingeschalterer CFAR-Schwelle überschreiten lediglich die Zielechos mit den drei größten Signalamplituden diese durch eine gestrichelte Linie eingezeichnete Schwelle, weil die Schwellenspannung aus dem Mittelwert aller Entfernungstore abgeleitet wird. Die Wiedergabe des entsprechenden Sektors des Sichtanzeigegerätes im unteren Teil der Fig. 3 zeigt daher nur die Zielechos des Ziele Z6, Z7, Z8. Alle übrigen, durch die CFAR-Schwelle zu Störern erklärten Echosignale werden unterdrückt. Aufgrund der Auswertung aller am Ausgang der Videoschwelle erhaltenen Signale werden auch die übrigen 5 Zielechos durch ihre zusätzliche Wiedergabe mit verminderter Helligkeit in ihrer Lage als halbhelle Bilder auf dem Sichtgerät für den Beobachter wahrnehmbar.

2 Patentansprüche
3 Figuren

Patentansprüche

1. Puls-Doppler-Radargerät mit einer in der Auswerteschaltung für die Videosignale vorgesehenen Videoschwelle zur Eliminierung von für die Weiterverarbeitung, z. B. Darstellung auf einem PPI-Sichtgerät unerwünschten Signalen und mit Einrichtungen, z. B. CFAR-Schaltung und/oder PLD-Schaltung zur Durchführung von ECCM-Maßnahmen, d a d u r c h   g e k e n n z e i c h - n e t ,  daß während der Durchführung einer oder mehrerer ECCM-Maßnahmen der Darstellung der extrahierten Zielechos am Sichtgerät aller am Ausgang der Videoschwelle (Festschwelle) erhaltenen Signale als zusätzliches Bild mit verminderter Helligkeit unterlegt sind.

2. Puls-Doppler-Radargerät nach Anspruch 1, d a - d u r c h   g e k e n n z e i c h n e t ,  daß das Unterliegbild mit verminderter Helligkeit mittels eines zweiten Ablenksystems des Sichtgerätes, z. B. über den Festziel-Echokanal zur Darstellung gelangt.

FIG 1

0037076

FIG 2

Z7

Z8

Z6

CFAR
Schwelle

U

Festschwelle

ET

FIG 3

Z8

Z7

Z6